# EUROPÄISCHE PATENTSCHRIFT

(11) **EP 1 924 513 B1**
(45) Veröffentlichungstag und Bekanntmachung des Hinweises auf die Patenterteilung: **03.06.2009**
(21) Anmeldenummer: 06791782.3
(22) Anmeldetag: 01.09.2006
(51) Int. Cl.: B65G 21/20

(54) **VORRICHTUNG ZUM FÜHREN VON GEGENSTÄNDEN IN EINER FÖRDERSTRECKE**
APPARATUS FOR GUIDING ARTICLES IN A CONVEYING SECTION
DISPOSITIF POUR GUIDER DES OBJETS DANS UNE SECTION DE TRANSPORT

(30) Priorität: 08.09.2005 DE 202005014167 U
(43) Veröffentlichungstag der Anmeldung: 28.05.2008
(73) Patentinhaber: KRONES AG, 93073 Neutraubling (DE)
(72) Erfinder: MAYER, Josef, 83209 Prien am Chiemsee (DE)
(86) Internationale Anmeldenummer: PCT/EP2006/008554
(87) Internationale Veröffentlichungsnummer: WO 2007/028551

(56) Entgegenhaltungen:
- EP-A2- 0 267 639
- US-A- 5 605 217

## Beschreibung

Die Erfindung betrifft eine Vorrichtung zum Führen von Gegenständen in einer Förderstrecke gemäß dem Oberbegriff des Anspruchs 1.

An Förderstrecken für Gegenstände, die stehend oder hängend transportiert werden, erstrecken sich üblicherweise längs zur Förderbahn verlaufende, nur einseitig oder beiderseits angeordnete Führungsflächen in Form von Geländern (DE 76 31 052 U, DE 296 10 201 U, WO 2004/099042 A1), wobei eine an einer Seite der Förderbahn verlaufende Führungsfläche ggf. durch mehrere übereinander höhenmäßig versetzte Teilflächen gebildet sein kann. Damit soll ein seitliches Ausbrechen der Gegenstände in Staubereichen verhindert und/oder eine Umlenkung in Kurvenbereichen gewährleistet werden.

Die Gegenstände können ein- oder mehrspurig zwischen einem Geländerpaar gefördert werden. Es sind aber auch durch mehrere parallel verlaufende Geländer mit Führungsflächen gebildete Führungsgassen für jeweils einspurig geförderte Gegenstandsreihen bekannt (DE 91 05 736 U, DE 86 05 952 U), um beispielsweise in Füll- und Verpackungslinien für Getränke oder Lebensmittel Flaschen, Dosen, Gläser, Weichpackungen, Gebinde, Kartons oder dgl. Behältnisse in mehreren einspurigen Reihen Behandlungsmaschinen zuzuführen, beispielsweise Verpackungsmaschinen zum Einhüllen einer Gruppe von Gegenständen mit einem Zuschnitt aus Karton oder Kunststofffolie oder zum Einsetzen in Flaschenkästen, Kartons oder andere Transportbehälter.

Die im jeweils speziellen Anwendungsfall zu wählende Formgebung, Oberflächenstruktur und Materialbeschaffenheit der mit den Gegenständen zusammenwirkenden Führungsflächen hängt von mehreren Umständen ab, um einen leistungsfähigen, störungsfreien und verschleißarmen Betrieb sicherzustellen. Ein Hauptkriterium sind vor allem die Eigenschaften und Besonderheiten der zu transportierenden Gegenstände, z.B. Flaschen, wie Materialbeschaffenheit, Standsicherheit, Außengeometrie (Mantelfläche, Bodenbereich), Form- und Oberflächenbeständigkeit (gegen Kratzspuren, Verformung).

Während bei Glasflaschen oder Dosen einfache und kostengünstige Kunststoffflächen gute Dienste leisten, können bei Gefäßen aus Kunststoffen bereits höhere Anforderungen bestehen, die ggf. Führungsflächen aus Metall oder hochwertigem Kunststoff erfordern. Bei einem stehenden Transport von leeren Kunststoffflaschen auf einem Förderband sind in bestimmten Fällen mit der Fördergeschwindigkeit der Flaschen mitlaufende Führungsflächen in Form von Riemen oder Bändern notwendig, weil bei einem Reibkontakt mit einer ortsfesten Führungsfläche in Folge der auftretenden Abbremsung ein Kippmoment entstehen kann, d.h. die Flaschen fallen möglicherweise um (DE 87 11 886 U, DE 691 08 696 T2). Eine Alternative sind Führungsflächen mit Fluidunterstützung. Aus Öffnungen in der Führungsfläche ausströmendes Fluid setzt die Reibung herab und unterstützt bei entsprechender Ausströmungsrichtung den Flaschentransport (US 5 605 217/Fig.5). Diese Lösung ist auch beim Transport leerer Dosen von Vorteil.

Kritisch ist ferner der Transport von Gegenständen mit in Bezug auf Reibung sehr empfindlicher Oberfläche. Beispielsweise durch Umhüllung einer Gruppe von Flaschen, Dosen oder dgl. mit einer Kunststoffschrumpffolie gebildete Gebinde sind insbesondere im noch warmen und damit weichen Zustand der Folie besonders beschädigungsanfällig. In so einem Fall kommen durch eine Vielzahl frei drehbar gelagerter Röllchen gebildete Führungsflächen zur Anwendung (EP 0 888 985 B1). Durch den rollenden Kontakt besteht nur ein sehr geringer von der Führungsfläche auf ein Gebinde ausgeübter Bremswiderstand.

Bislang war bei einer Nutzung von Förderstrecken für unterschiedliche Gegenstände häufig ein Austausch der zur seitlichen Führung verwendeten Geländer notwendig, um immer die für den entsprechenden Anwendungsfall optimale Führungsfläche bereitzustellen. Dies ist zeitaufwändig und umständlich.

Davon ausgehend liegt der Erfindung die Aufgabe zu Grunde, eine Lösung anzugeben, die eine einfache und schnelle Anpassbarkeit von Förderstrecken an verschiedene Gegenstände ermöglicht.

Gelöst wird die Aufgabe durch die kennzeichnenden Merkmale des Anspruchs 1.

Aus der Erfindungsgemäßen Lösung ergibt sich der Vorteil, dass ein Auswechseln von Führungsflächen bildenden Bauteilen entfällt. Die angegebene Vorrichtung weist eine erste und wenigstens eine zweite Führungsfläche auf, die sich in ihren Führungseigenschaften unterscheiden. So kann eine Führungsfläche beispielsweise als eine aus einem Metall- und/oder Kunststoffkörper gebildete stationäre Gleitfläche für einen ersten Typ von Gegenständen gestaltet sein, während eine auf der gleichen Seite der Förderbahn der Gegenstände positionierte, ggf. höhenversetzte, z.B. durch frei drehbare Röllchen oder mitführbare Riemen bzw. Bänder gebildete Führungsfläche für einen wenigstens zweiten Typ von Gegenständen bereitgehalten wird.

Je nach dem, welcher Typ von Gegenständen aktuell durch die Förderstrecke gefahren werden soll, wird die dafür passende Führungsfläche aus einer Bereitschaftsstellung in eine Betriebsstellung überführt, vorzugsweise durch eine Verschiebung quer zur Förderbahn, insbesondere parallel zur Förderebene der Gegenstände, während andere Führungsflächen mit anderen Führungseigenschaften außer Eingriff bleiben.

Alternativ sind beispielsweise um eine parallel zur Förderbahn ausgerichtete Achse drehbare Führungskörper mit mehreren umfänglich versetzt angeformten Führungsflächen unterschiedlicher Eigenschaften denkbar, wobei durch Schwenken der Führungskörper um diese Achse die jeweils passende Führungsfläche in eine seitlich zur Förderbahn der Gegenstände weisende Betriebsposition verbring- und arretierbar ist.

Eine Führungsfläche mit Gleiteigenschaften längs einer glatten, ebenen Oberfläche kann z.B. bei Glasflaschen, Kartons oder Kunststoffkästen zum Einsatz kommen, während eine durch drehbare Röllchen gebildete, auf widerstandsarmer Rollreibung basierende Führungsfläche für empfindliche Foliengebinde oder kratz- und kippempfindliche Kunststoffflaschen zur Anwendung kommen mag. Es können noch weitere Führungsflächen mit speziellen Führungseigenschaften bereitgehalten und bei Bedarf in Eingriff gelangen, wie mit fluidischer oder magnetischer Unterstützung arbeitende Führungsflächen, in Form von Fluid in Richtung zu den Gegenständen abgebenden Austrittsöffnungen oder ein Magnetfeld mit beispielsweise abstoßender Wirkung erzeugenden Mitteln in der Führung. Hierfür können Magnetwerkstoffe oder durch Stromfluss Magnetwirkung entfaltende Einrichtungen wie Wicklungen o.ä. entlang der Führungsfläche vorgesehen werden.

Zur Überführung einer Führungsfläche aus einer Bereitschaftsstellung in die Betriebsstellung und umgekehrt kann ein sehr kurzer Verstellweg von wenigen Millimetern ausreichen. Dadurch können mehrere verschiedene Eigenschaften aufweisende Führungsflächen in die Seitenflächen eines Trägers höhenversetzt verschiebbar integriert werden, wobei zur Aktivierung der einzelnen Führungsflächen manuell oder motorisch betätigbare Einrichtungen in Form von Gestängen, Hebeln, Exzentern o.ä. einsetzbar sind.

Besonders vorteilhaft und einfach ist eine Beaufschlagung der einzelnen Führungsflächen durch elastische Druckkissen oder Schläuche, die zwischen dem Träger und der Rückseite einer Führungsfläche angeordnet sind und bei pneumatischer oder hydraulischer Druckbeaufschlagung die jeweilige Führungsfläche vom Träger weg zur Förderbahn der Gegenstände hin verlagern und bei Druckentlastung beispielsweise durch die Gegenstände selbsttätig in Richtung zum Träger zurückstellbar sind.

Zur Steuerung der motorischen Stellantriebe - gleich welcher Art (pneumatisch, hydraulisch, elektrisch)- kann eine zentrale Steuerung (SPS, PC usw.) zum Einsatz kommen, die eine schnelle Umstellung einer kompletten Förderanlage zum Transportieren verschiedener Gegenstände in kürzester Zeit ohne einen Wechsel von Führungsteilen ermöglicht.

Besonders vorteilhaft ist eine Anwendung der Erfindung im Zu- und/oder Ablaufbereich einer mehrbahnig arbeitenden Verpackungsmaschine für Flaschen, Dosen oder Gebinde, da hier aus einer Vielzahl von parallelen Führungsflächen gebildete Führungsgassen vorhanden sind und bislang ein besonders hoher und häufig vorzunehmender Umstellaufwand gegeben war, der nun entfällt.

Zur Anpassung an unterschiedliche Außenabmessungen der verschiedenen Gegenstände können herkömmliche Verstelleinrichtungen zum Einsatz kommen. Sollen alle Führungsgassen gleiche Abstände aufweisen, sind beispielsweise Vorrichtungen entsprechend DE 295 01 098 U oder DE 101 46 447 C1 verwendbar, während eine Verstelleinrichtung nach DE 296 17 148 U eine individuelle, unterschiedliche Zwischenabstände ermöglichende Positionierung von Führungsflächen gestattet.

Weiter vorteilhafte Ausgestaltungen der Erfindung sind Gegenstand der verbleibenden Unteransprüche.

Im Folgenden wird ein bevorzugtes Ausführungsbeispiel anhand der Fig. erläutert. Es zeigt:
- Fig. 1: eine Führungsflächen aufweisende Geländeranordnung einer Förderstrecke in einer in Transportrichtung dargestellten Ansicht,
- Fig. 2: eine Detaildarstellung der Geländeranordnung nach Fig. 1 in vergrößerter Abbildung mit jeweils einer Bereitschafts- und Betriebsstellung der Führungsflächen und
- Fig. 3: einen Teilabschnitt der Geländeranordnung nach Fig. 1 in einer Seitenansicht.

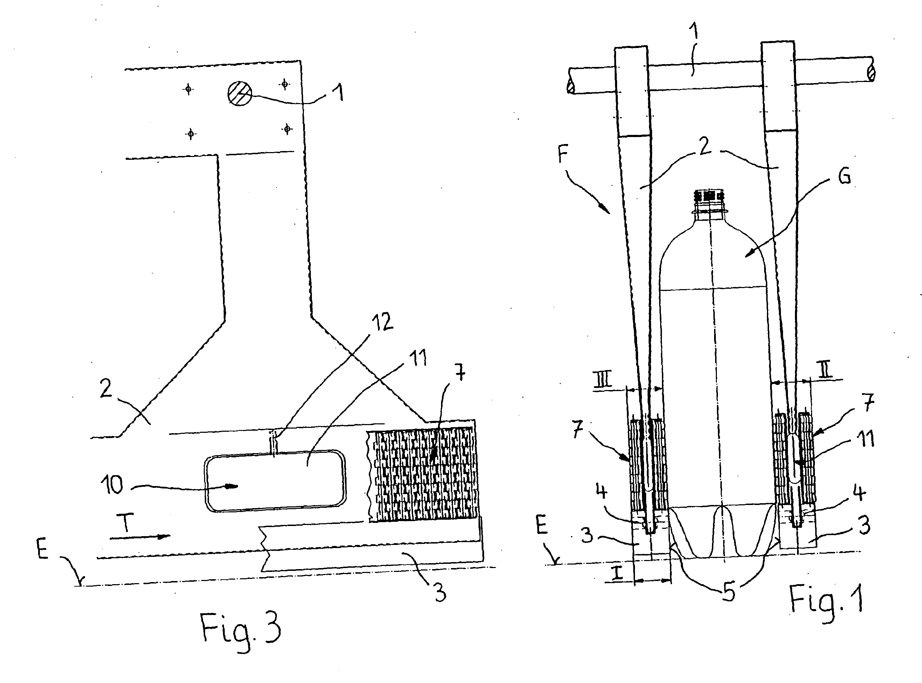

Die Fig. 1 zeigt einen Teilausschnitt einer Fördereinrichtung für Gegenstände wie Flaschen oder dgl. im Einlauf einer Verpackungsmaschine, die Flaschengruppen beispielsweise in Schrumpffolienzuschnitte einschlägt. Die Fördereinrichtung F bildet eine die aufrecht stehend transportierten Flaschen G bodenseitig abstützende Förderebene E, die durch Mattenketten-, Scharnierband- oder Gurtbandförderer o.ä. gebildet sein kann.

Mit Abstand oberhalb der Förderebene E verläuft quer zur Transportrichtung ausgerichtet wenigstens eine Traverse 1. An ihr sind längsverschiebbar geführte, frei nach unten hängende Träger 2 gelagert, die mit etwas Abstand oberhalb der Förderebene E enden. Die längs zur Transportrichtung T zueinander parallel verlaufend ausgerichteten Träger 2 sind plattenartig ausgebildet (siehe Fig. 3) und können in ihrem gegenseitigen Zwischenabstand auf unterschiedliche Abmessungen von Gegenständen, z.B. Flaschen G, durch Verschieben entlang der Traverse 1 passend eingestellt werden.

Ein einzelner Träger 2 wird im Wesentlichen aus zwei nach unten hin abstandsverjüngend zusammenlaufenden Blechplatten gebildet. Sie sind an ihrem unteren Ende verbunden und werden dort von einem nach oben offen längsgeschlitzten Führungskörper 3 umfasst, der durch Befestigungselemente 4 (Schrauben, Stifte) an den Blechplatten befestigt ist. Dieser Führungskörper 3 besitzt zwei seitlich vom Träger 2 nach außen weg zur Förderbahn der Flaschen G weisende glatte Führungsflächen 5 mit einer ebenen Oberfläche auf. Er kann beispielsweise aus einem verschleißfesten Kunststoff mit niedrigem Reibwert bestehen.

Im Bereich oberhalb des Führungskörpers 3 weisen die den Träger 2 bildenden Blechplatten in gleicher Höhe jeweils eine fensterartige Öffnung 10 auf, in der ein formangepasstes, pneumatisch beaufschlagbares Druckkissen 11 aus einem elastischen Material eingebettet ist.

Es kann über eine zu einem nicht dargestellten Pneumatikventil führende Anschlussleitung 12 wahlweise mit einer Druckluftquelle verbunden oder zur Atmosphäre hin entlüftet werden. Die Betätigung des Pneumatikventils kann manuell oder elektrisch über eine vorzugsweise speicherprogrammierbare Steuerung erfolgen.

Zu beiden Seiten des Druckkissens 11 sind an den voneinander wegweisenden Seiten des Trägers 2 Röllchenkörper 7 angeordnet. Sie werden jeweils aus einem U-förmig gebogenen Profil 8, zwischen dessen freien, waagerechten Schenkeln mehrere parallele, senkrecht ausgerichtete Drahtstifte befestigt und mit frei drehbar gelagerten Röllchen 9 bestückt sind, gebildet. Die in einer gemeinsamen Ebene liegenden Röllchen 9 bilden eine Führungsfläche 6 für Gegenstände mit einer - aufgrund ihrer Rollreibung - nur minimalen Rückwirkung auf die damit in Berührung kommende Oberfläche von vorbeigleitenden Gegenständen.

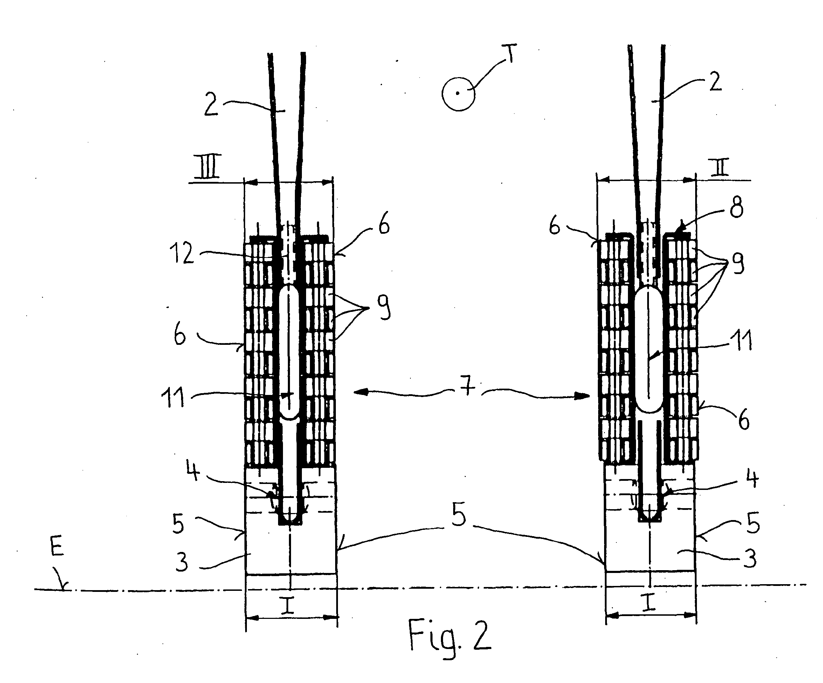

Das Druckkissen 11 dient als Stellantrieb für die in einer zur Förderebene E parallelen Ebene relativ zum Träger 2 an diesem verlagerbar geführten Röllchenkörper 7 und damit der zweiten Führungsfläche 6. Je nach dem, ob das Druckkissen 11 mit Druckluft beaufschlagt oder entlüftet ist, nehmen die beiderseits zugeordneten Röllchenkörper 7 die vom Träger 2 weiter entfernt liegende Betriebstellung (Darstellung rechts) oder die nahe am Träger liegende Bereitschaftsstellung (Darstellung links) ein. Beide Stellungen sind aus den Darstellungen der Fig. 2 gut erkennbar.

Rechter Hand ist ein Träger 2 mit zwei sich in der Betriebsstellung befindenden Röllchenkörpern 7 abgebildet, die von dem unter Druck stehenden, aufgeblähten Druckkissen 11 seitlich vom Träger weg auseinandergedrängt werden, wobei die von ihren Röllchen 9 gebildeten zweiten Führungsflächen 6 einen größeren gegenseitigen Abstand II aufweisen als die beiden darunter liegenden ersten Führungsflächen 5 am Führungskörper 3, die einen festen Abstand I besitzen. Der Überstand der zweiten Führungsfläche 6 in ihrer Betriebsstellung gegenüber der ersten Führungsfläche 5 kann sehr gering sein, z.B. nur knapp etwas über 1 mm betragen. Dadurch ist ein nur kleiner Stellhub des Druckkissens 11 von beispielsweise 3 mm völlig ausreichend.

Linker Hand befinden sich die Röllchenkörper 7 auf Grund des entlüfteten Druckkissens 11 in ihrer Bereitschaftsstellung, in der ihre zwei voneinander wegweisenden Führungsflächen 6 einen geringeren Abstand III einnehmen als der Abstand I der beiden ersten Führungsflächen 5 des Führungskörpers 3, die sich damit in der Betriebsstellung befinden, d.h. für die vorbeigeführten Gegenstände die aktiven Leitflächen bilden.

Die Röllchenkörper 7 werden bevorzugt zum Führen von in Schrumpffolie eingeschlagene Gebinde oder Kunststoffflaschen in die Betriebsstellung gebracht, während die glatten Führungsflächen 5 beispielsweise für Glasflaschen oder ähnlich robuste und standfeste Gegenstände zum Einsatz kommen.

## Patentansprüche

1. Vorrichtung zum Führen von Gegenständen (G) in einer Förderstrecke (F) mit wenigstens einer längs zur Förderbahn der Gegenstände (G) seitlich neben diesen verlaufenden mit einer zu den Gegenständen weisenden Führungsfläche (5), **dadurch gekennzeichnet, dass** die Vorrichtung wenigstens eine weitere, zweite Führungsfläche (6) mit von einer ersten Führungsfläche (5) abweichenden Führungseigenschaften aufweist und die erste Führungsfläche (5) und/oder die wenigstens zweite Führungsfläche (6) aus einer zu den Gegenständen (G) beabstandeten Bereitschaftsstellung in eine mit den Gegenständen (G) in Kontakt stehende Betriebsstellung und umgekehrt überführbar ist.

2. Vorrichtung nach Anspruch 1, **dadurch gekennzeichnet, dass** die Führungseigenschaften der ersten (5) und der wenigstens zweiten Führungsfläche (6) durch die Ausbildung der jeweiligen Oberflächengestalt und/oder Materialeigenschaften bestimmt sind und vorzugsweise unterschiedliche Roll-, Haft-, Gleit- oder Reibeigenschaften aufweisen.

3. Vorrichtung nach Anspruch 1 oder 2, **dadurch gekennzeichnet, dass** zwischen einem Gegenstand (G) und der ersten Führungsfläche (5) bzw. der wenigstens zweiten Führungsfläche (6) wahlweise ein rollender und/oder gleitender und/oder haftender und/oder fluidischer und/oder magnetischer Kontakt während der Bewegung des Gegenstandes (G) in Transportrichtung (T) besteht.

4. Vorrichtung nach wenigstens einem der vorhergehenden Ansprüche 1 bis 3, **dadurch gekennzeichnet, dass** entweder die erste Führungsfläche (5) oder die wenigstens zweite Führungsfläche von einer parallel zur Förderbahn eines Gegenstandes (G) verlaufenden, stationären Fläche eines Kunststoff- oder Metallkörpers (3) gebildet wird und vorzugsweise eben ausgestaltet ist.

5. Vorrichtung nach Anspruch 4, **dadurch gekennzeichnet, dass** die erste Führungsfläche oder die wenigstens zweite Führungsfläche Austrittsöffnungen für ein Fluid, insbesondere Luft und/oder ein Magnetfeld erzeugende Einrichtungen oder Werkstoffe aufweist.

6. Vorrichtung nach wenigstens einem der vorhergehenden Ansprüche 1 bis 3, **dadurch gekennzeichnet, dass** die erste Führungsfläche oder die wenigstens zweite Führungsfläche (6) durch drehbare Röllchen (9) gebildet wird.

7. Vorrichtung nach wenigstens einem der vorhergehenden Ansprüche 1 bis 3, **dadurch gekennzeichnet, dass** die erste Führungsfläche oder die wenigstens zweite Führungsfläche durch mit einem Gegenstand mitführbare Riemen oder Bänder gebildet wird.

8. Vorrichtung nach wenigstens einem der Ansprüche 1 bis 7, **dadurch gekennzeichnet, dass** die erste Führungsfläche und/oder die wenigstens zweite Führungsfläche durch ein Betätigungselement (11), vorzugsweise einen steuerbaren Stellantrieb aus einer Bereitschaftsstellung in eine Betriebsstellung und/oder umgekehrt überführbar ist.

9. Vorrichtung nach Anspruch 8, **dadurch gekennzeichnet, dass** das Betätigungselement (11) manuell, hydraulisch, elektromotorisch, elektromagnetisch oder pneumatisch beaufschlagbar ausgebildet ist, vorzugsweise als ein elastisches Druckkissen, Schlauch, Balg oder eine Membrane.

10. Vorrichtung nach wenigstens einem der vorhergehenden Ansprüche 1 bis 9, **dadurch gekennzeichnet, dass** die erste Führungsfläche (5) und die wenigstens zweite Führungsfläche (6) an der gemeinsamen Seite eines Trägers (2) gelagert sind, wobei wenigstens eine der beiden Führungsflächen (6) durch ein Betätigungselement (11) relativ zum Träger (2) verlagerbar ist, insbesondere quer zur Förderbahn der Gegenstände (G).

11. Vorrichtung nach Anspruch 10, **dadurch gekennzeichnet, dass** der Träger (2) an voneinander wegweisenden Seiten jeweils eine erste (5) und wenigstens eine zweite Führungsfläche (6) aufweist.

12. Vorrichtung nach Anspruch 10 oder 11, **dadurch gekennzeichnet, dass** die Förderstrecke (F) wenigstens zwei mit Zwischenabstand einander gegenüberliegend parallel längs zur Förderbahn der Gegenstände (G) verlaufend ausgerichtete Träger (2) mit jeweils einer ersten (5) und wenigstens einer zweiten Führungsfläche (6) aufweist.

13. Vorrichtung nach wenigstens einem der Ansprüche 10 bis 12, **dadurch gekennzeichnet, dass** der/die Träger (2) an im wesentlichen quer zur Förderbahn der Gegenstände (G) verlaufenden Traversen (1) vorzugsweise hängend gelagert sind.

14. Vorrichtung nach Anspruch 13, **dadurch gekennzeichnet, dass** der/die Träger (2) längs entlang den Traversen (1) verlagerbar geführt ist/sind und vorzugsweise durch eine Verstelleinrichtung einzeln und/oder gruppenweise auf die Abmessungen der Gegenstände (G) einstellbar sind.

15. Vorrichtung nach wenigstens einem der vorhergehenden Ansprüche, **dadurch gekennzeichnet, dass** die erste Führungsfläche und/oder die wenigstens zweite Führungsfläche an einem um eine zur Förderbahn der Gegenstände parallel ausgerichtete Achse drehbaren Träger angeordnet ist.

16. Vorrichtung nach wenigstens einem der Ansprüche 1 bis 15, **dadurch gekennzeichnet, dass** die Gegenstände (G) Gefäße wie Flaschen aus Glas oder Kunststoff, Dosen, Kästen, Kartons, Weichpackungen oder Gebinde, insbesondere durch eine Folienumhüllung gebildete Gebinde, sind.

17. Vorrichtung nach wenigstens einem der Ansprüche 1 bis 16, **dadurch gekennzeichnet, dass** die Vorrichtung Bestandteil einer Verpackungsmaschine, insbesondere zum Bilden von Gebinden, ist.

## Claims

1. Apparatus for guiding articles (G) in a conveying section (F) having at least one guide surface (5) which extends longitudinally with respect to the conveying path of the articles (G) and laterally alongside and oriented towards the latter, **characterised in that** the apparatus has at least one additional, second, guide surface (6) with guide characteristics differing from those of the first guide surface (5), and the first guide surface (5) and/or the at least second guide surface (6) can be transferred from a stand by position spaced from the articles (G) to an operating position in contact with the articles (G), and vice versa.

2. Apparatus according to claim 1, **characterised in that** the guide characteristics of the first guide surface (5) and of the at least second guide surface (6) are determined by the nature of the respective surface configuration and/or material characteristics and preferably have different rolling, adhesion, sliding or friction characteristics.

3. Apparatus according to claim 1 or 2, **characterised in that,** during movement of the articles (G) in the conveying direction (T), there exists between an article (G) and the first guide surface (5), respectively the at least second guide surface (6), selectively a rolling and/or sliding and/or adhering and/or fluid and/or magnetic contact.

4. Apparatus according to at least one of the preceding claims 1 to 3, **characterised in that** either the first guide surface (5) or the at least second guide surface is formed by a stationary, preferably flat, surface of a plastics or metal body (3) extending parallel with respect to the conveying path of an article (G).

5. Apparatus according to claim 4, **characterised in that** the first guide surface or the at least second guide surface has outlet openings for a fluid especially air, and/or devices or substances that create a magnetic field.

6. Apparatus according to at least one of the preceding claims 1 to 3, **characterised in that** the first guide surface or the at least second guide surface (6) is formed by rotatable little rollers (9).

7. Apparatus according to at least one of the preceding claims 1 to 3, **characterised in that** the first guide surface or the at least second guide surface is formed by belts or bands which can go along with an article.

8. Apparatus according to at least one of claims 1 to 7, **characterised in that** the first guide surface and/or the at least second guide surface can be transferred from a stand by position to an operating position, and/or vice versa, by an actuating means (11) being preferably a controllable setting device.

9. Apparatus according to claim 8, **characterised in that** the actuating means (11) can be acted upon manually, hydraulically, by an electric motor, electromagnetically or pneumatically, preferably being a resilient pressure pad, hose, bellows, or a membrane.

10. Apparatus according to at least one of the preceding claims 1 to 9, **characterised in that** the first guide surface (5) and the at least second guide surface (6) are positioned at the same side of a carrier (2), at least one of the two guide surfaces (6) being transposable relatively to the carrier (2) by an actuating means (11), especially transversely with respect to the conveying path of the articles (G).

11. Apparatus according to claim 10, **characterised in that** the carrier (2), at its sides that are oriented away from each other, has a first guide surface (5) and at least one second guide surface (6).

12. Apparatus according to claim 10 or 11, **characterised in that** the conveying section (F) has at least two carriers (2), spaced apart, opposite each other and extending parallel longitudinally with respect to the conveying path of the articles (G), each having a first guide surface (5) and at least one second guide surface (6).

13. Apparatus according to at least one of claims 10 to 12, **characterised in that** the carrier(s) (2) are positioned, preferably suspended, from cross members (1) extending essentially transversely with respect to the conveying path of the articles (G).

14. Apparatus according to claim 13, **characterised in that** the carrier(s) (2) is or are guided so as to be transposable along the length of the cross members (1), and can preferably be adjusted by an adjustment device, individually or in batches, to the dimensions of the articles (G).

15. Apparatus according to at least one of the preceding claims, **characterised in that** the first guide surface and/or the at least second guide surface is arranged on a carrier that is rotatable about an axis oriented parallel with respect to the conveying path of the articles.

16. Apparatus according to at least one of claims 1 to 15, **characterised in that** the articles (G) are vessels such as bottles made of glass or plastics, cans, boxes, cartons, soft packs, or packages, especially packages that are formed by foil wrapping.

17. Apparatus according to at least one of claims 1 to 16, **characterised in that** the apparatus forms part of a packing machine, especially for forming packages.

## Revendications

1. Dispositif de guidage d'objets (G) sur un chemin de transfert (F) à l'aide d'au moins une surface de guidage (5) dirigée longitudinalement par rapport au chemin de transfert des objets (G), latéralement à côté de ceux-ci, et tournée vers ceux-ci,
**caractérisé en ce que**
le dispositif comporte au moins une autre seconde surface de guidage (6), ayant des propriétés de guidage différentes de celles de la première surface de guidage (5), et
la première surface de guidage (5) et/ou au moins une seconde surface de guidage (6), peuvent passer d'une position préparatoire écartée des objets (G) dans une position de travail, en contact avec les objets (G) ou inversement.

2. Dispositif selon la revendication 1,
**caractérisé en ce que**
les propriétés de guidage de la première surface de guidage (5) et celle d'au moins une seconde surface de guidage (6) sont définies par la réalisation de la forme respective de la surface et/ou des propriétés de la matière et elles correspondent de préférence à des propriétés de roulage, d'accrochage, de glissement et de friction, différentes.

3. Dispositif selon la revendication 1 ou 2,
**caractérisé en ce qu'**
entre un objet (G) et la première surface de guidage (5) ou au moins la seconde surface de guidage (6) il y a sélectivement un contact de roulement et/ou de glissement et/ou d'accrochage et/ou un contact fluidique et/ou un contact magnétique pendant le mouvement de l'objet (G) dans la direction de transfert (T).

4. Dispositif selon au moins l'une des revendications précédentes 1 à 3,
**caractérisé en ce que**
la première surface de guidage (5) ou au moins une seconde surface de guidage sont formées par des surfaces stationnaires, parallèles au chemin de transfert de l'objet (G), ces surfaces appartenant à un corps en matière plastique ou un corps métallique (3) et elles sont de préférence planes.

5. Dispositif selon la revendication 4,
**caractérisé en ce que**
la première surface de guidage ou au moins la seconde surface de guidage comportent des orifices de sortie pour un fluide notamment de l'air et/ou des installations ou des matières générant un champ magnétique.

6. Dispositif selon au moins l'une des revendications précédentes 1 à 3,
**caractérisé en ce que**
la première surface de guidage ou au moins la seconde surface de guidage (6) sont formées par des petits rouleaux (9), rotatifs.

7. Dispositif selon au moins l'une des revendications précédentes 1 à 3,
**caractérisé en ce que**
la première surface de guidage ou au moins une seconde surface de guidage sont réalisées par une courroie ou par des bandes circulant avec l'objet.

8. Dispositif selon au moins l'une des revendications 1 à 7,
**caractérisé en ce que**
la première surface de guidage et/ou au moins une seconde surface de guidage peuvent être transférées par un élément d'actionnement (11) de préférence par un actionneur commandé, d'une position prête à fonctionner dans une position active et/ou inversement.

9. Dispositif selon la revendication 8,
**caractérisé en ce que**
l'élément d'actionnement (11) est réalisé de façon à fonctionner manuellement, par un moyen hydraulique, un moyen électromoteur, un moyen électromagnétique ou un moyen pneumatique et cet élément est de préférence réalisé par un coussin de pression, élastique, un tuyau, un soufflet ou une membrane.

10. Dispositif selon au moins l'une des revendications précédentes 1 à 9,
**caractérisé en ce que**
la première surface de guidage (5) et au moins la seconde surface de guidage (6) sont montées sur un côté commun d'un support (2) et au moins l'une des deux surfaces de guidage (6) est déplacée par un élément d'actionnement (11) par rapport au support (2) notamment transversalement au chemin de transfert des objets (G).

11. Dispositif selon la revendication 10,
**caractérisé en ce que**
sur des faces opposées, le support (2) comporte respectivement une première surface de guidage (5) et au moins une seconde surface de guidage (6).

12. Dispositif selon la revendication 10 ou 11,
**caractérisé en ce que**
le chemin de transfert (F) comporte au moins deux supports (2), qui se font face en laissant un intervalle, parallèlement le long du chemin de transfert des objets (G), et ayant chacun une première surface de guidage (5) et au moins une seconde surface de guidage (6).

13. Dispositif selon au moins l'une des revendications 10 à 12,
**caractérisé en ce que**
le ou les supports (2) sont montés de préférence suspendus à des traverses (11) dirigées pratiquement transversalement par rapport au chemin de transfert des objets (G).

14. Dispositif selon la revendication 13,
**caractérisé en ce que**
le ou les supports (2) sont guidés de façon à se déplacer le long des traverses (1) et ils sont réglables de préférence par une installation de réglage, séparément et/ou par groupes en fonction des dimensions des objets (G).

15. Dispositif selon au moins l'une des revendications précédentes,
**caractérisé en ce que**
la première surface de guidage et/ou au moins la seconde surface de guidage sont prévues sur un support pivotant autour d'un axe aligné parallèlement au chemin de transfert des objets.

16. Dispositif selon au moins l'une des revendications 1 à 15,
**caractérisé en ce que**
les objets (G) sont des récipients tels que des bouteilles en verre ou en matière plastique, des boîtes, des caisses, des cartons, des emballages souples ou des colis notamment des colis formés avec un film enveloppe.

17. Dispositif selon au moins l'une des revendications 1 à 16,
**caractérisé en ce que**
le dispositif fait partie d'une machine d'emballage notamment pour former des colis.
